# EUROPÄISCHE PATENTSCHRIFT

(11) **EP 3 325 180 B1**
(45) Veröffentlichungstag und Bekanntmachung des Hinweises auf die Patenterteilung: **17.02.2021**
(21) Anmeldenummer: 16734573.5
(22) Anmeldetag: 15.06.2016
(51) Int. Cl.: G10K 9/122, G10K 11/22, B06B 1/06, G01S 7/521, G01S 15/931

(54) **VORRICHTUNG ZUM AUSSENDEN UND/ODER EMPFANGEN AKUSTISCHER SIGNALE**
DEVICE FOR TRANSMITTING AND/OR RECEIVING ACOUSTIC SIGNALS
DISPOSITIF D'ÉMISSION ET/OU DE RÉCEPTION DE SIGNAUX ACOUSTIQUES

(30) Priorität: 24.07.2015 DE 102015213990
(43) Veröffentlichungstag der Anmeldung: 30.05.2018
(73) Patentinhaber: Robert Bosch GmbH, 70442 Stuttgart (DE)
(72) Erfinder: KARL, Matthias, 76275 Ettlingen (DE)
(86) Internationale Anmeldenummer: PCT/EP2016/063701
(87) Internationale Veröffentlichungsnummer: WO 2017/016739

(56) Entgegenhaltungen:
- EP-A1- 1 432 595
- DE-A1- 2 451 307
- JP-A- H08 154 289
- JP-A- 2007 255 924
- JP-A- 2012 029 083
- US-A1- 2014 269 211
- US-B2- 7 235 914

## Beschreibung

### Stand der Technik

Die vorliegende Erfindung betrifft eine Vorrichtung zum Aussenden und/oder Empfangen akustischer Signale.

Vorrichtungen zum Aussenden und/oder Empfangen akustischer Signale, wie zum Beispiel Ultraschallsensoren, werden insbesondere im Bereich der Fahrzeugtechnik häufig eingesetzt. In solchen Ultraschallsensoren ist typischerweise ein elektroakustischer Wandler mit einer Membran gekoppelt. Dabei wird eine mechanische Schwingung des elektroakustischen Wandlers auf die Membran übertragen, um eine möglichst große schallabstrahlende Fläche zu schaffen. Der sich von der großen Membranfläche ablösende Schall wird dabei von der Membran unmittelbar in den zu vermessenden Raum abgestrahlt oder bei einem Empfangen akustischer Signale auf umgekehrte Weise von der Membran aufgenommen. Dadurch kommt es jedoch zu Verlusten in der effektiven Sendeleistung, da der von der Membran rückwärtig abgestrahlte Schall nicht genutzt wird.

Die JP2012029083A offenbart einen elektroakustischen Übertrager, welcher mehrere Wellenleiter umfasst und dazu geeignet ist, eine Oszillationsrichtung akustischer Wellen zu steuern, wobei Ultraschallwellen von zwei Seiten des elektroakustischen Übertragers abgegeben werden. Die US2014/269211A1 offenbart einen Übertrager, in welchem akustische Wellen durch unterschiedliche Wellenleiter geleitet werden. Die JP2007255924A und die JPH08154289A offenbaren weitere akustische Bauelemente.

Aus der DE102007021616A1 und der DE10018807A1 sind Ultraschallsensoren mit jeweils einem schalleitenden Element bekannt.

### Offenbarung der Erfindung

Die erfindungsgemäße Vorrichtung zur Umfelddetektion durch Aussenden und/oder Empfangen akustischer Signale, umfasst eine Vorrichtung nach Anspruch 1.

Auf diese Weise wird ein besonders effizienter und präziser akustischer Sensor geschaffen. Es wird ermöglicht, dass von der Wandlereinheit abgegebene Schallwellen gezielt in die Umgebung der Vorrichtung abgegeben werden. Es werden Verluste verringert, die entstehen, wenn eine Richtung, in welche die Schallwellen, also das akustische Signal, von der Wandlereinheit abgegeben werden, nicht einer gewünschten Sende- und/oder Erfassungsrichtung der Vorrichtung entsprechen. Auch solche Anteile des von der Wandlereinheit ausgesandten akustischen Signals, welche nicht unmittelbar in Richtung der gewünschten Sende- und/oder Empfangsrichtung der Vorrichtung abgegeben werden, tragen dennoch zu einem von der Vorrichtung ausgesandten akustischen Signal bei. Ferner wird ein hohen Freiheitsgrad bei einer Gestaltung der Wandlereinheit erreicht, da die erste Richtung und die zweite Richtung, in welche das akustische Signal abgegeben wird, nicht mit einer Sende- und/oder Erfassungsrichtung der Vorrichtung übereinstimmen müssen. Zudem wird die Wandlereinheit vor schädlichen Umwelteinflüssen geschützt, da diese mittels der Kanäle von der Umgebung der Vorrichtung getrennt ist.

Die Unteransprüche zeigen bevorzugte Weiterbildungen der Erfindung.

Es ist vorteilhaft, wenn die Wandlereinheit derart mit dem Gehäuse abschließt, dass diese die auf der Seite des inneren Volumens der Vorrichtung gelegenen Enden der Kanäle voneinander trennt. Somit wird eine effektive Trennung der Schallwellen, welche durch die unterschiedlichen Kanäle gleitet werden ermöglicht und ungewollte Überlagerungen dieser Schallwellen, welche zu Auslöschungen führen können, werden unterbunden.

Die Wandlereinheit umfasst einen elektroakustischen Wandler und eine erste Membran, wobei der elektroakustische Wandler dazu eingerichtet ist, die erste Membran zu einer Schwingung anzuregen, und/oder von dieser ersten Membran zu einer Schwingung angeregt zu werden. Insbesondere liegen dabei die erste und die zweite Richtung auf unterschiedlichen Seiten der Membran. Somit wird sowohl die Bewegung der Vorderseite als auch der Rückseite des schwingenden elektroakustischen Wandlers in eine entsprechende Hubarbeit mindestens einer Luftschallsäule übersetzt.

Die Wandlereinheit umfasst ferner eine zweite Membran, wobei der elektroakustische Wandler dazu eingerichtet ist, die zweite Membran zu einer Schwingung anzuregen und/oder von dieser zweiten Membran zu einer Schwingung angeregt zu werden, wobei von der ersten Membran abgegebene Schallwellen über den ersten Kanal zu der Umgebung der Vorrichtung geleitet werden und von der zweiten Membran abgegebene Schallwellen über den zweiten Kanal zu der Umgebung der Vorrichtung geleitet werden und/oder Schallwellen aus der Umgebung der Vorrichtung über den ersten Kanal zu der ersten Membran geleitet werden und über den zweiten Kanal zu der zweiten Membran geleitet werden. Es wird somit ermöglicht, dass zwei unterschiedliche Membrane durch denselben elektroakustischen Wandler angeregt werden. Ungewollte Überlagerungen von Schallwellen, welche von den unterschiedlichen Membranen abgegeben werden, werden dabei verhindert.

Auch ist es vorteilhaft, wenn ein Volumen zwischen der ersten Membran und der zweiten Membran über einen dritten Kanal mit der Umgebung der Vorrichtung verbunden ist. Die Vorrichtung umfasst somit einen dritten Kanal, der das innere Volumen der Vorrichtung mit der Umgebung der Vorrichtung verbindet, wobei von der ersten Membran und von der zweiten Membran abgegebene Schallwellen über den dritten Kanal zu der Umgebung der Vorrichtung geleitet werden und/oder Schallwellen aus der Umgebung der Vorrichtung über den dritten Kanal sowohl zu der ersten Membran als auch zu der zweiten Membran geleitet werden. Auf diese Weise werden auch solche Schallwellen, welche von der Wandlereinheit abgegeben werden und nicht eindeutig einer der Membrane zugeordnet werden können, gezielt in die Umgebung der Vorrichtung geleitet und somit wird eine Effizienz der Vorrichtung weiter gesteigert.

Ferner ist es vorteilhaft, wenn die Kanäle über eine gemeinsame Ausgangsöffnung in der Umgebung der Vorrichtung enden. Auf diese Weise wird eine Anzahl von Öffnungen in dem Gehäuse der Vorrichtung minimiert, wodurch weniger Schmutz in die Vorrichtung eindringen kann. Ferner wird ein Aufwand minimiert, falls die Öffnung in einer beliebigen Weise versiegelt werden soll. Zudem ergeben sich ästhetische Vorteile, falls diese Öffnung beispielsweise an einer Außenseite eines Fahrzeugelementes befindlich ist.

Ebenso vorteilhaft ist es, wenn die Kanäle über jeweils eine Ausgangsöffnung in der Umgebung der Vorrichtung enden. Es ergeben sich damit zusätzliche Freiheitsgrade bei der Gestaltung der Kanäle. Auch wird eine großflächigere Abstrahlung des akustischen Signals ermöglicht und/oder eine größflächige Empfangsoberfläche geschaffen. Es wird somit eine Verdeckung des Sensors durch externe Elemente erschwert.

Des Weiteren ist es vorteilhaft, wenn jeder der Kanäle jeweils eine Längsachse aufweist, wobei die Längsachsen der Kanäle, insbesondere auf Seiten der Ausgangsöffnungen, nicht parallel zueinander sind. Somit geben die Kanäle die jeweils durch diese geleiteten Schallwellen in unterschiedliche Richtungen bezüglich der Umgebung in der Vorrichtung ab. Dazu sind die auf Seiten der Umgebung der Vorrichtung liegenden Enden der Kanäle unterschiedlich zueinander ausgerichtet. Eine Abstrahlcharakteristik der Vorrichtung kann somit auf besonders einfache Weise beeinflusst werden. Auch wird es ermöglicht, dass mehrere Richtungen durch lediglich eine erfindungsgemäße Vorrichtung überwacht werden.

Bevorzugt ist zumindest einer der Kanäle auf Seiten der Umgebung der Vorrichtung mittels einer flexiblen Schutzschicht abgedeckt. Somit wird ein Eindringen von Verschmutzungen in das Gehäuse unterbunden.

Des Weiteren ist es vorteilhaft, wenn zumindest zwei der Kanäle eine Länge unterschiedliche Länge aufweisen, wobei deren Länge sich insbesondere um eine halbe Wellenlänge des akustischen Signals unterscheidet. Insbesondere weisen die Kanäle jeweils eine Länge auf, die derart gewählt ist, dass es auf Seiten der Umgebung der Vorrichtung zu einer positiven Überlagerung der jeweils durch diese geleiteten Schallwellen kommt. Es wird somit eine besonders hohe Effizienz der Vorrichtung ermöglicht. Entsprechendes gilt bei einem Empfangen des akustischen Signals.

Auch ist es vorteilhaft, wenn zumindest einer der Kanäle zwischen dem inneren Volumen der Vorrichtung und der Umgebung der Vorrichtung eine zusätzliche Öffnung aufweist, durch welche Verschmutzungen austreten können und deren Durchmesser geringer ist, als ein Durchmesser des jeweiligen Kanals. Auf diese Weise werden Verstopfungen der Kanäle vermieden und eine Verfügbarkeit der Vorrichtung gesichert. Da der Durchmesser der zusätzlichen Öffnung erfindungsgemäß geringer ist, als ein Durchmesser des jeweiligen Kanals, in welchem sich die zusätzliche Öffnung befindet, werden Verluste bei einem Leiten der Schallwellen durch die Kanäle minimiert, da diese kaum in die zusätzlichen Öffnungen eintreten werden.

Weiter bevorzugt ist die Vorrichtung ein Ultraschallsensor.

### Kurze Beschreibung der Zeichnungen

Nachfolgend werden Ausführungsbeispiele der Erfindung unter Bezugnahme auf die begleitende Zeichnung im Detail beschrieben. In der Zeichnung ist:
- Figur 1: Eine Vorrichtung zur Umfelddetektion durch Aussenden und/oder Empfangen akustischer Signale,

- Figur 2: eine Vorrichtung zur Umfelddetektion durch Aussenden und/oder Empfangen akustischer Signale entsprechend einer ersten Ausführungsform der Erfindung und
- Figur 3: eine beispielhafte Anordnung mehrerer Ausgangsöffnungen einer erfindungsgemäßen Vorrichtung in einer zweiten Ausführungsform.

### Ausführungsformen der Erfindung

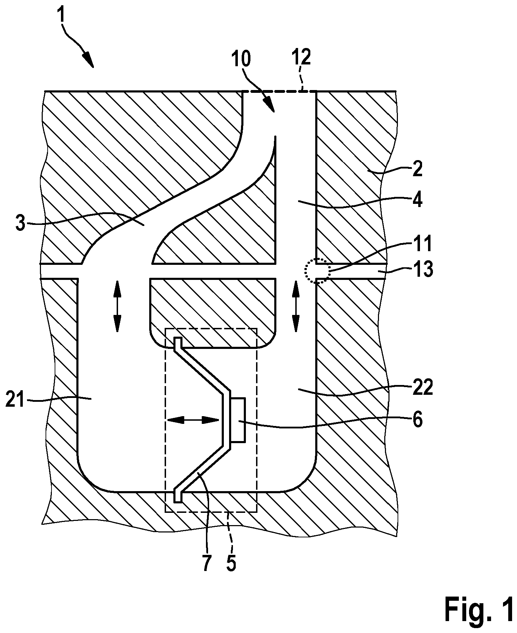

Figur 1 zeigt eine Vorrichtung 1 zur Umfelddetektion durch Aussenden und/oder Empfangen akustischer Signale in einem ersten Beispiel. Die Vorrichtung 1 umfasst ein Gehäuse 2, welches zumindest einen ersten Kanal 3 und einen zweiten Kanal 4 aufweist, die jeweils ein inneres Volumen der Vorrichtung 1 mit einer Umgebung der Vorrichtung 1 verbinden. Das Gehäuse 2 ist in diesem Beispiel ein Sensorgehäuse, welches ein schallharter Körper ist. Schallhart bedeutet dabei, dass das Gehäuse 2 eine entsprechende Masse aufweist und aus einem entsprechenden Material besteht, dass dieses nur in geringem Maße durch die von einer Wandlereinheit 5 der Vorrichtung 1 abgegebenen akustischen Schwingung zu einer Schwingung angeregt wird. Es sei darauf hingewiesen, dass das Gehäuse 2 in alternativen Ausführungsformen zugleich ein Bauteil sein kann, welches weitere, von dem Aussenden und/oder Empfangen akustischer Signale unabhängige Aufgaben erfüllt. So kann das Gehäuse 2 beispielsweise ein Stoßfänger, ein Scheinwerfer oder ein anderes Bauteil eines Fahrzeuges sein. Das innere Volumen der Vorrichtung 1 wird in diesem Beispiel durch einen Hohlraum im inneren des Gehäuses 2 gebildet. Der erste Kanal 3 führt von dem inneren Volumen der Vorrichtung 1 zu einer gemeinsamen Ausgangsöffnung 10, welche an einer Oberfläche des Gehäuses 2 angeordnet ist. Der zweite Kanal 4 verbindet ebenfalls das innere Volumen der Vorrichtung 1 mit der gemeinsamen Ausgangsöffnung 10. Der erste Kanal 3 und der zweite Kanal 4 enden somit über die gemeinsame Ausgangsöffnung 10 in der Umgebung der Vorrichtung.

Die Vorrichtung 1 umfasst ferner die Wandlereinheit 5, die zumindest einen elektroakustischen Wandler 6 und eine erste Membran 7 umfasst, wobei der elektroakustische Wandler 6 dazu eingerichtet ist, die erste Membran 7 zu einer Schwingung anzuregen und/oder von dieser ersten Membran 7 zu einer Schwingung angeregt zu werden. Die Wandlereinheit 5 ist in dem inneren Volumen der Vorrichtung 1 angeordnet. Ein äußerer Umfang der ersten Membran 7 schließt mit einer inneren Wandung des Gehäuses 2 in dem inneren Volumen der Vorrichtung 1 ab. Das innere Volumen der Vorrichtung 1 wird somit durch die Membran 7 in einen ersten Bereich 21 und einen zweiten Bereich 22 unterteilt. Der erste Kanal 3 führt von dem ersten Bereich 21 zu der gemeinsamen Ausgangsöffnung 10. Der zweite Kanal 4 führt von dem zweiten Bereich 22 zu der gemeinsamen Ausgangsöffnung 10. Der elektroakustische Wandler ist in diesem Beispiel ein Piezoelement.

pDer elektroakustische Wandler 6 ist in einem Zentrum der ersten Membran 7 angeordnet. Wird der elektroakustische Wandler 6 zu einer Schwingung angeregt, so schwingt die erste Membran 7 mit dem elektroakustischen Wandler 6, wobei Schallwellen in eine erste Richtung abgegeben werden, die in diesem Beispiel in der Richtung des ersten Bereichs 21 und somit des ersten Kanals 3 liegt, und Schallwellen in eine zweite Richtung abgegeben werden, die in diesem Beispiel in der Richtung des zweiten Bereichs 22 und somit des zweiten Kanals 4 liegt.

Da der erste Kanal 3 in dem ersten Bereich 21 endet und der zweite Kanal 4 in dem zweiten Bereich 22 endet und der erste Bereich 21 durch die erste Membran 7 von dem zweiten Bereich 22 getrennt ist, ergibt sich, dass der erste Kanal 3 und der zweite Kanal 4 auf unterschiedlichen Seiten der Wandlereinheit enden.

Die Wandlereinheit 5 ist derart bezüglich der Kanäle 3, 4 angeordnet, dass von der Wandlereinheit 5, insbesondere von der ersten Membran 7, abgegebene Schallwellen über die Kanäle, also den ersten Kanal 3 und den zweiten Kanal 4, zu der Umgebung der Vorrichtung 1 geleitet werden. Umgekehrt werden Schallwellen aus Umgebung der Vorrichtung 1 über diese Kanäle 3, 4 zu der Wandlereinheit 5 geleitet. Zugleich schließt die Wandlereinheit 5 durch die erste Membran 7 derart mit dem Gehäuse 2 ab, dass die Wandlereinheit 5 die auf der Seite des inneren Volumens der Vorrichtung gelegenen Ende der Kanäle 3, 4 voneinander trennt.

Der erst Kanal 3 und der zweite Kanal 4 weisen jeweils eine Länge auf, die derart gewählt ist, dass es auf Seiten der Umgebung der Vorrichtung 1 zu einer positiven Überlagerung der jeweils durch diese geleiteten Schallwellen kommt. Die Länge eines Kanals 3, 4 ist dabei jeweils eine Wegstrecke zwischen der gemeinsamen Öffnung 10 und der ersten Membran 7. Wird die erste Membran 7 in diesem Beispiel in eine Schwingung versetzt, so werden Schallwellen auf Seiten des ersten Bereichs 21 und Schallwellen auf Seiten des zweiten Bereichs 22 verursacht, die zwei zueinander um 180° phasenversetzte akustische Signale bilden. Die Länge des ersten Kanals 3 ist daher größer als die Länge des zweiten Kanals 4, wobei die Länge des ersten Kanals 3 um eine solche Strecke größer als die Länge des zweiten Kanals 4 ist, dass eine durch den ersten Kanal 3 laufende Schallwelle an der gemeinsamen Ausgangsöffnung 10 um eine halbe Schwingungsdauer gegenüber einer durch den zweiten Kanal 4 geleiteten Schallwelle verzögert wird. Somit kommt es zu einer positiven Überlagerung der jeweils durch den ersten Kanal 3 und den zweiten Kanal 4 geleiteten Schallwellen.

Jeder der Kanäle 3, 4 weist zwischen dem inneren Volumen der Vorrichtung 1 und der Umgebung der Vorrichtung 1 eine zusätzliche Öffnung 11 auf, durch welche Verschmutzungen austreten können und deren Durchmesser geringer ist, als ein Durchmesser des jeweiligen Kanals 3, 4. Die zusätzliche Öffnung 11 hat eine gegenüber der Querschnittsfläche der Kanäle 3, 4 vernachlässigbaren Öffnungsdurchmesser. Somit ist eine aus dem akustischen Signal resultierende, sich entlang der zusätzlichen Öffnung 11 ausbreitende Schallleistung vernachlässigbar. Die zusätzliche Öffnung 11 ist über einen zusätzlichen Kanal 13 mit der Umgebung der Vorrichtung 1 verbunden. Es wird somit ermöglicht, dass in den ersten Kanal 3 oder den zweiten Kanal 4 eingetretene Fremdstoffe, wie zum Beispiel Tauwasser oder Schmutz, wieder austreten können.

Alternativ oder zusätzlich zu der zusätzlichen Öffnung 11 ist die gemeinsame Ausgangsöffnung 10 auf Seiten der Umgebung der Vorrichtung 1 mittels einer flexiblen Schutzschicht 12 abgedeckt. Die flexible Schutzschicht 12 ist in diesem ersten Beispiel eine Folie, welche die gemeinsame Ausgangsöffnung 10 überspannt. Alternativ zu der Folie ist eine andere schalldurchlässige Schicht, wie zum Beispiel ein Gitter, über der Ausgangsöffnung 10 angeordnet. Diese ist durchlässig für die von der Wandlereinheit 5 ausgehenden Schallwellen, schützt aber die Vorrichtung 1 vor einem Eindringen von Stoffen aus der Umgebung der Vorrichtung 1.

Durch geeignete Gestaltung der Kanallängen unter Berücksichtigung der Schalllaufzeiten, beziehungsweise Geschwindigkeiten, werden die Schallströme in der dargestellten Version somit bereits innerhalb des Gehäuses superponiert, bevor sie durch die gemeinsame Ausgangsöffnung 10 in das zu vermessende Medium entlassen werden. Die Laufzeiten sind dabei bevorzugt so zu wählen, dass diese sich konstruktiv verstärken. Durch nahezu parallele Führung der Schallleitung vor dem Zusammentreffen wird ein Überkoppeln auf benachbarte Kanäle weitgehend verhindert.

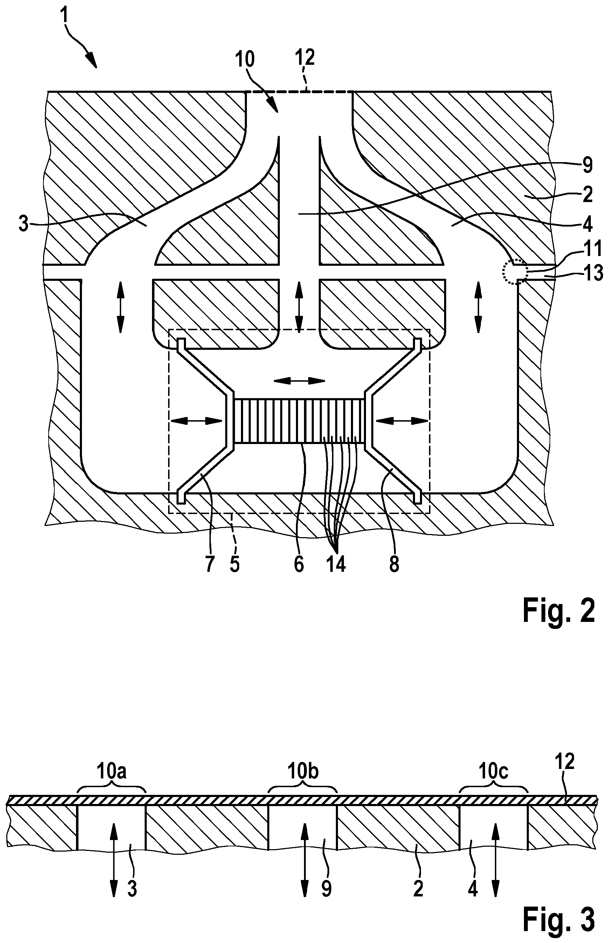

Figur 2 zeigt eine Vorrichtung 1 zum Aussenden und/oder Empfangen akustischer Signale in einer ersten Ausführungsform. Die erste Ausführungsform entspricht im Wesentlichen dem obigen Beispiel. In dieser ersten Ausführungsform weist die Wandlereinheit 5 jedoch ferner eine zweite Membran 8 auf, wobei der elektroakustische Wandler 6 dazu eingerichtet ist die erste Membran 7 und die zweite Membran 8 zu einer Schwingung anzuregen und/oder von der ersten Membran 7 und der zweiten Membran 8 zu einer Schwingung angeregt zu werden. Die zweite Membran 8 ist auf eine der ersten Membran 7 entsprechender Weise in dem inneren Volumen der Vorrichtung 1 angeordnet. Der erste Bereich 21 wird von der ersten Membran 7 und zusätzlich durch die zweite Membran 8 von dem zweiten Bereich 22 getrennt. Zwischen der ersten Membran 7 und der zweiten Membran 8 liegt ein dritter Bereich 23. Somit ist der erste Bereich 21 durch die erste Membran 7 von dem dritten Bereich 23 getrennt. Der dritte Bereich 23 ist durch die zweite Membran 8 von dem zweiten Bereich 22 getrennt. Der elektroakustische Wandler 6 ist auf einer ersten Seite mit der ersten Membran 7 verbunden und auf einer zweiten Seite, welche der ersten Seite gegenüber liegt, mit der zweiten Membran 8 verbunden. Der elektroakustische Wandler 6 wird somit sowohl von der ersten Membran 7 als auch von der zweiten Membran 8 getragen. Wird der elektroakustische Wandler 6 zu einer Schwingung angeregt, so zieht sich dieser derart zusammen, dass die erste Membran 7 und die zweite Membran 8 zueinander gezogen werden oder dehnt sich derart aus, dass die erste Membran 7 und die zweite Membran 8 auseinandergedrückt werden.

Der elektroakustische Wandler 6 wird in dieser ersten Ausführungsform von einer Vielzahl von Piezoelementen 14 gebildet, die aufeinander gestapelt sind. Da die erste Membran 7 an den ersten Bereich 21 anschließt und der erste Bereich 21 über dem ersten Kanal 3 mit der gemeinsamen Ausgangsöffnung 10 verbunden ist, werden die von der ersten Membran 7 abgegebenen Schallwellen über den ersten Kanal 3 zu der Umgebung der Vorrichtung geleitet. Da die zweite Membran 8 an den zweiten Bereich 22 angrenzt und der zweite Bereich 22 über den zweiten Kanal 4 mit der gemeinsamen Ausgangsöffnung 10 verbunden ist, werden die von der zweiten Membran 8 angegebenen Schallwellen über den zweiten Kanal 4 zu der Umgebung der Vorrichtung geleitet. Bei einem Empfangen von Schallwellen aus der Umgebung der Vorrichtung ergibt sich ein umgekehrter Effekt, wobei Schallwellen aus der Umgebung der Vorrichtung über den ersten Kanal 3 zu der ersten Membran 7 geleitet werden und über den zweiten Kanal 4 zu der zweiten Membran 8 geleitet werden.

Werden die erste Membran 7 und die zweite Membran 8 in dieser Ausführungsform in eine Schwingung versetzt, so werden Schallwellen auf Seiten des ersten Bereichs 21 und Schallwellen auf Seiten des zweiten Bereichs 22 verursacht, die zueinander phasengleiche akustische Signale bilden. Daher weisen der erste Kanal 3 und der zweite Kanal 4 in dieser Ausführungsform die gleiche Länge auf. Somit kommt es auch in dieser ersten Ausführungsform zu einer positiven Überlagerung der jeweils durch den ersten Kanal 3 und den zweiten Kanal 4 geleiteten Schallwellen.

In dieser ersten Ausführungsform umfasst um die Vorrichtung 1 ferner einen dritten Kanal 9, der das innere Volumen der Vorrichtung 1 mit der Umgebung der Vorrichtung 1 verbindet. In dieser ersten Ausführungsform verbindet der dritte Kanal 9 den dritten Bereich 23 mit der gemeinsamen Ausgangsöffnung 10. Somit ist ein Volumen zwischen der ersten Membran 7 und der zweiten Membran 8 über einen dritten Kanal 9 mit der Umgebung der Vorrichtung verbunden. Wird der elektroakustische Wandler 6 zu einer Schwingung angeregt, so ergeben sich in dem ersten Bereich 21 und dem zweiten Bereich 22 zueinander phasengleiche Schallwellen. Zudem ergibt sich in dem dritten Bereich 23 eine Schallwelle, die zu den Schallwellen in dem ersten Bereich 21 und dem zweiten Bereich 22 gegenphasig sind. Damit es zu einer positiven Überlagerung aller Schallwellen an der Ausgangsöffnung 10 kommt, ist die Länge des dritten Kanals 9 derart gewählt, dass die Phasenverschiebung ausgeglichen wird.

Die Länge des dritten Kanals 9 ist geringer als die Länge des ersten und zweiten Kanals 3,4, wobei die Länge des dritten Kanals 9 um eine solche Strecke geringer als die Länge des ersten und zweiten Kanals 3, 4 ist, dass eine durch den dritten Kanal 9 laufende Schallwelle um eine halbe Schwingungsdauer gegenüber den durch den ersten oder zweiten Kanal 3, 4 laufenden Schallwellen versetzt wird und es an der Ausgangsöffnung 10 zu einer positiven Überlagerung der jeweils durch den ersten Kanal 3, den zweiten Kanal 4 und den dritten Kanal 9 geleiteten Schallwellen kommt. Somit weisen zumindest zwei der Kanäle 3, 4, 9, hier der erste Kanal 3 und der dritte Kanal 9 sowie der zweite Kanal 4 und der dritte Kanal 9 eine Länge unterschiedliche Länge auf. Dabei unterscheidet sich deren Länge um eine halbe Wellenlänge des akustischen Signals.

Da der dritte Bereich 23 und der dritte Kanal 9 zwischen der ersten Membran 7 und der zweiten Membran 8 liegt, werden sowohl von der ersten Membran 7 als auch von der zweiten Membran 8 angegebene Schallwellen über den dritten Kanal 9 zu der Umgebung der Vorrichtung geleitet. Entsprechend werden bei einem Empfangen von Schallwellen aus der Umgebung der Vorrichtung diese über den dritten Kanal 9 sowohl zu der ersten Membran 7 als auch zu der zweiten Membran 8 geleitet.

Es ist ersichtlich, dass bei einer derartigen Anordnung eines elektroakustischen Wandlers 6 eine relative Bewegung des elektroakustischen Wandlers 6 zumindest von den Kräften abhängt, welche durch die erste Membran 7 und die zweite Membran 8 auf diesen ausgeübt werden, als auch von einer Schwingungsfrequenz des elektroakustischen Wandlers6 abhängt. In einer bevorzugten Ausführung sind diese Kraftverhältnisse so ausbalanciert, dass der elektroakustische Wandler 6 zwischen seinen Stirnflächen, welche mit der ersten Membran 7 und die zweite Membran 8 verbunden sind, einen Punkt aufweist, der sich bei einer Anregung des elektroakustischen Wandlers 6 gegenüber dem Gehäuse 2 nicht oder nur wenig bewegt. An diesem Punkt weist der elektroakustische Wandler eine Kontaktierung auf, über welche der elektroakustische Wandler 6 mit einer entsprechenden Elektronik verbunden ist, welche zur Anregung des elektroakustischen Wandlers 6 geeignet ist oder dazu geeignet ist ein elektrisches Signal auszuwerten, welches sich bei einer Anregung des elektroakustischen Wandlers 6 durch Schallwellen aus der Umgebung der Vorrichtung 1 ergibt.

Figur 3 zeigt einen Ausschnitt einer Vorrichtung 1 zum Aussenden und/oder Empfangen akustischer Signale in einer zweiten Ausführungsform. Die zweite Ausführungsform entspricht der ersten Ausführungsform der Erfindung, jedoch enden die Kanäle 3, 4, 9 in dieser zweiten Ausführungsform nicht in einer gemeinsamen Ausgangsöffnung 10, sondern sind über jeweils eine separate Ausgangsöffnung 10a, 10b, 10c mit der Umgebung der Vorrichtung 1 verbunden. So endet der erste Kanal 3 in einer ersten Ausgangsöffnung 10a, der zweite Kanal 4 in einer zweiten Ausgangsöffnung 10c und der dritte Kanal 9 in einer dritten Ausgangsöffnung 10b. Es ist somit ersichtlich, dass die Anzahl der Ausgangsöffnungen 10 auf einfache Weise an die Zahl der Kanäle 3, 4, 9 angepasst werden kann. Dabei ist es ferner vorteilhaft, wenn eine beliebige Anzahl der Kanäle 3, 4, 9 in einer gemeinsamen Ausgangsöffnung 10 enden und andere Kanäle in zusätzlichen Ausgangsöffnungen enden. Somit wird ein hoher Freiheitsgrad bei der Gestaltung der Kanäle 3, 4, 9 in dem Gehäuse 2 erreicht. In der in der Figur 3 gezeigten zweiten Ausführungsform sind die Ausgangsöffnungen 10a, 10b, 10c in eine gleiche Richtung gerichtet, welche in Figur 3 vertikal zu einer Oberfläche des Gehäuses 2 steht. Figur 3 zeigt somit eine alternative Führung der Kanäle 3, 4, 9, bei der die Schallschwingungen mit den Öffnungsflächen jeweils räumlich durch die Abstände getrennt an das zu vermessende Medium angekoppelt sind.

Aus den physikalischen Grundlagen her ist es bekannt, wie sich einzelne voneinander beabstandete Schallschwingungen der Luft im Messraum, also in der Umgebung der Vorrichtung 1, miteinander superponieren. Ein Abstand zwischen den Ausgangsöffnungen 10a, 10b, 10c ist entsprechend gewählt.

In alternativen Ausführungsformen geben die Kanäle 3, 3, 9 die jeweils durch diese geleiteten Schallwellen in unterschiedliche Richtungen bezüglich der Umgebung der Vorrichtung 1 ab. Dies wird zum Beispiel dadurch erreicht, dass die Kanäle 3, 4, 9 in unterschiedlichen Winkeln auf dieselbe Oberfläche des Gehäuses 2 treffen, oder dass die Kanäle 3, 4, 9 an unterschiedlichen Oberflächen des Gehäuses 2 austreten, welche in einem ausgewählten Winkel zueinander stehen. Somit sind jeweilige Längsachsen der Kanäle 3, 4,9 auf Seiten der Ausgangsöffnungen 10a, 10b, 10c nicht parallel zueinander.

Allgemein ist zu vermerken, dass sich die Stirnseiten des elektroakustischen Wandlers 6 bei entsprechender elektrischer Ansteuerung entsprechend der in den Figuren 1 und 2 dargestellten Doppelpfeile hin und her bewegen lassen. An den Stirnflächen des elektroakustischen Wandlers 6 sind die erste Membran 7 und die zweite Membran 8 befestigt, die weitgehend, insbesondere in ihren Randbereichen, so starr ausgelegt sind, dass diese die durch den elektroakustischen Wandler 6 auf sie wirkendenden Kräfte derart aufnehmen, dass diese eine Verbiegung von insbesondere weniger als 20% des maximalen Hubs des elektroakustischen Wandlers erfahren.

Der erfindungsgemäße Grundgedanke ist, dass alle durch den elektroakustischen Wandler 6 erzeugten Kräfte zu Membranbewegungen führen und keine den Wandler abstützenden Kräfte auftreten.

Membranbewegungen führen in den Kanälen 3, 4, 9 zu entsprechenden Druckschwankungen und in dem dritten Kanal 9 zu gegenphasigen Druckschwankungen. Dem Fachmann ist bekannt, dass, ein inkompressibles ideales Luftmedium vorausgesetzt, die Drücke durch die Flächenverhältnisse der Membranflächen und dem jeweiligen Querschnitt der Kanäle 3, 4, 9 bestimmt sind.

Neben der obigen schriftlichen Offenbarung wird explizit auf die Offenbarung der Figuren 1 bis 3 verwiesen.

## Patentansprüche

1. Vorrichtung (1) zur Umfelddetektion durch Aussenden und/oder Empfangen akustischer Signale, umfassend:
ein Gehäuse (2), welches zumindest einen ersten Kanal (3) und einen zweiten Kanal (4) aufweist, die jeweils ein inneres Volumen der Vorrichtung (1) mit einer Umgebung der Vorrichtung (1) verbinden,
eine Wandlereinheit (5), die dazu eingerichtet ist, ein akustisches Signal in eine erste Richtung und in eine zweite Richtung abzugeben und/oder durch ein akustisches Signal aus einer ersten und einer zweiten Richtung angeregt zu werden,
wobei der erste Kanal (3) auf Seiten der ersten Richtung gegenüber der Wandlereinheit (5) endet und der zweite Kanal (4) auf Seiten der zweiten Richtung gegenüber der Wandlereinheit (5) endet, und
wobei die Wandlereinheit (5) in dem inneren Volumen der Vorrichtung (1) angeordnet ist und derart bezüglich der Kanäle (3, 4) angeordnet ist, dass
- von der Wandlereinheit (5) abgegebene Schallwellen über die Kanäle (3, 4) zu der Umgebung der Vorrichtung (1) geleitet werden und/oder
- Schallwellen aus der Umgebung der Vorrichtung (1) über die Kanäle (3, 4) zu der Wandlereinheit (5) geleitet werden,
wobei die Wandlereinheit (5) einen elektroakustischen Wandler (6) und eine erste Membran (7) umfasst, wobei der elektroakustische Wandler (6) dazu eingerichtet ist, die erste Membran (7) zu einer Schwingung anzuregen, und/oder von dieser ersten Membran (7) zu einer Schwingung angeregt zu werden,
**dadurch gekennzeichnet, dass**
die Wandlereinheit (5) ferner eine zweite Membran (8) umfasst, wobei der elektroakustische Wandler (6) dazu eingerichtet ist, die zweite Membran (8) zu einer Schwingung anzuregen, und/oder von dieser zweiten Membran (8) zu einer Schwingung angeregt zu werden, wobei
- von der ersten Membran (7) abgegebene Schallwellen über den ersten Kanal (3) zu der Umgebung der Vorrichtung (1) geleitet werden und von der zweiten Membran (8) abgegebene Schallwellen über den zweiten Kanal (4) zu der Umgebung der Vorrichtung (1) geleitet werden und/oder
- Schallwellen aus der Umgebung der Vorrichtung (1) über den ersten Kanal (3) zu der ersten Membran (7) geleitet werden und über den zweiten Kanal (4) zu der zweiten Membran (8) geleitet werden.

2. Vorrichtung gemäß Anspruch 1, **dadurch gekennzeichnet, dass** die Wandlereinheit derart mit dem Gehäuse abschließt, dass diese die auf der Seite des inneren Volumens der Vorrichtung gelegenen Enden der Kanäle voneinander trennt.

3. Vorrichtung gemäß Anspruch 1, **dadurch gekennzeichnet, dass** ein Volumen zwischen der ersten Membran (7) und der zweiten Membran (8) über einen dritten Kanal (9) mit der Umgebung der Vorrichtung (1) verbunden ist.

4. Vorrichtung gemäß einem der vorangehenden Ansprüche, **dadurch gekennzeichnet, dass** die Kanäle (3, 4, 9) über eine gemeinsame Ausgangsöffnung (10) in der Umgebung der Vorrichtung (1) enden.

5. Vorrichtung gemäß einem der Ansprüche 1 bis 3, **dadurch gekennzeichnet, dass** die Kanäle (3, 4, 9) über jeweils eine Ausgangsöffnung (10a, 10b, 10c) in der Umgebung der Vorrichtung (1) enden.

6. Vorrichtung gemäß Anspruch 5, **dadurch gekennzeichnet, dass** jeder der Kanäle (3, 4,9) jeweils eine Längsachse aufweist, wobei die Längsachsen der Kanäle (3, 4, 9), insbesondere auf Seiten der Ausgangsöffnungen (10a, 10b, 10c), nicht parallel zueinander sind.

7. Vorrichtung gemäß einem der vorangehenden Ansprüche, **dadurch gekennzeichnet, dass** zumindest einer der Kanäle (3, 4, 9) auf Seiten der Umgebung der Vorrichtung (1) mittels einer flexiblen Schutzschicht abgedeckt ist.

8. Vorrichtung gemäß einem der vorangehenden Ansprüche, **dadurch gekennzeichnet, dass** zumindest zwei der Kanäle (3, 4, 9) eine unterschiedliche Länge aufweisen, wobei deren Länge sich insbesondere um eine halbe Wellenlänge des akustischen Signals unterscheidet.

9. Vorrichtung gemäß einem der vorangehenden Ansprüche, **dadurch gekennzeichnet, dass** zumindest einer der Kanäle (3, 4, 9) zwischen dem inneren Volumen der Vorrichtung (1) und der Umgebung der Vorrichtung (1) eine zusätzliche Öffnung (11) aufweist, durch welche Verschmutzungen austreten können und deren Durchmesser geringer ist als ein Durchmesser des jeweiligen Kanals (3, 4, 9).

## Claims

1. Device (1) for detecting the surroundings by emitting and/or receiving acoustic signals, comprising:
a housing (2) which has at least a first duct (3) and a second duct (4) which each connect an internal volume of the device (1) to the surroundings of the device (1),
a transducer unit (5) which is configured to output an acoustic signal in a first direction and in a second direction and/or to be excited by an acoustic signal from a first direction and a second direction,
wherein the first duct (3) ends on the side of the first direction with respect to the transducer unit (5), and the second duct (4) ends on the side of the second direction with respect to the transducer unit (5), and
wherein the transducer unit (5) is arranged in the internal volume of the device (1) and is arranged with respect to the ducts (3, 4) in such a way that
- soundwaves which are output by the transducer unit (5) are directed to the surroundings of the device (1) via the ducts (3, 4), and/or
- soundwaves from the surroundings of the device (1) are directed to the transducer unit (5) via the ducts (3, 4),
wherein the transducer unit (5) comprises an electroacoustic transducer (6) and a first diaphragm (7), wherein the electroacoustic transducer (6) is configured to excite the first diaphragm (7) to oscillate and/or to be excited to oscillate by this first diaphragm (7),
**characterized in that**
the transducer unit (5) also comprises a second diaphragm (8), wherein the electroacoustic transducer (6) is configured to excite the second diaphragm (8) to oscillate and/or to be excited to oscillate by this second diaphragm (8), wherein
- soundwaves which are output by the first diaphragm (7) are directed to the surroundings of the device (1) via the first duct (3), and soundwaves which are output by the second diaphragm (8) are directed to the surroundings of the device (1) via the second duct (4), and/or
- soundwaves from the surroundings of the device (1) are directed to the first diaphragm (7) via the first duct (3) and are directed to the second diaphragm (8) via the second duct (4).

2. Device according to Claim 1, **characterized in that** the transducer unit terminates with the housing in such a way that said unit separates the ends of the ducts which are located on the side of the internal volume of the device from one another.

3. Device according to Claim 1, **characterized in that** a volume between the first diaphragm (7) and the second diaphragm (8) is connected to the surroundings of the device (1) via a third duct (9) .

4. Device according to one of the preceding claims, **characterized in that** the ducts (3, 4, 9) end in the surroundings of the device (1) via a common outlet opening (10).

5. Device according to one of Claims 1 to 3, **characterized in that** the ducts (3, 4, 9) end in the surroundings of the device (1) via, in each case, one outlet opening (10a, 10b, 10c).

6. Device according to Claim 5, **characterized in that** each of the ducts (3, 4, 9) respectively has a longitudinal axis, wherein the longitudinal axes of the ducts (3, 4, 9) are not parallel to one another, in particular on the sides of the outlet openings (10a, 10b, 10c).

7. Device according to one of the preceding claims, **characterized in that** at least one of the ducts (3, 4, 9) is covered by means of a flexible protective layer on the side of the surroundings of the device (1).

8. Device according to one of the preceding claims, **characterized in that** at least two of the ducts (3, 4, 9) have a different length, wherein their length differs, in particular, by half a wavelength of the acoustic signal.

9. Device according to one of the preceding claims, **characterized in that** at least one of the ducts (3, 4, 9) has, between the internal volume of the device (1) and the surroundings of the device (1), an additional opening (11) through which soiling can emerge and whose diameter is smaller than a diameter of the respective duct (3, 4, 9).

## Revendications

1. Dispositif (1) pour une détection d'environnement par émission et/ou réception de signaux acoustiques, comprenant :
un boîtier (2) qui présente au moins un premier canal (3) et un deuxième canal (4) qui relient respectivement un volume intérieur du dispositif (1) à un environnement du dispositif (1),
une unité de conversion (5) qui est aménagée pour émettre un signal acoustique dans une première direction et dans une deuxième direction et/ou pour être excitée par un signal acoustique provenant d'une première et d'une deuxième direction,
le premier canal (3) se terminant à l'opposé de l'unité de conversion (5) du côté de la première direction, et le deuxième canal (4) se terminant à l'opposé de l'unité de conversion (5) du côté de la deuxième direction, et
l'unité de conversion (5) étant disposée dans le volume intérieur du dispositif (1) et disposée par rapport aux canaux (3, 4) de telle sorte que
- des ondes sonores émises par l'unité de conversion (5) sont guidées par l'intermédiaire des canaux (3, 4) jusqu'à l'environnement du dispositif (1), et/ou
- des ondes sonores provenant de l'environnement du dispositif (1) sont guidées par l'intermédiaire des canaux (3, 4) jusqu'à l'unité de conversion (5), l'unité de conversion (5) comprenant un convertisseur électroacoustique (6) et une première membrane (7), le convertisseur électroacoustique (6) étant aménagé pour faire osciller la première membrane (7), et/ou pour être amené à osciller par cette première membrane (7),
**caractérisé en ce que**
l'unité de conversion (5) comprend en outre une deuxième membrane (8), le convertisseur électroacoustique (6) étant aménagé pour faire osciller la deuxième membrane (8), et/ou pour être amené à osciller par cette deuxième membrane (8), dans lequel
- des ondes sonores émises par la première membrane (7) sont guidées par l'intermédiaire du premier canal (3) jusqu'à l'environnement du dispositif (1), et des ondes sonores émises par la deuxième membrane (8) sont guidées par l'intermédiaire du deuxième canal (4) jusqu'à l'environnement du dispositif (1), et/ou
- des ondes sonores provenant de l'environnement du dispositif (1) sont guidées par l'intermédiaire du premier canal (3) jusqu'à la première membrane (7) et sont guidées par l'intermédiaire du deuxième canal (4) jusqu'à la deuxième membrane (8).

2. Dispositif selon la revendication 1, **caractérisé en ce que** l'unité de conversion affleure avec le boîtier de telle sorte qu'elle sépare les unes des autres les extrémités des canaux situées du côté du volume intérieur du dispositif.

3. Dispositif selon la revendication 1, **caractérisé en ce qu'**un volume entre la première membrane (7) et la deuxième membrane (8) est relié à l'environnement du dispositif (1) par l'intermédiaire d'un troisième canal (9) .

4. Dispositif selon l'une quelconque des revendications précédentes, **caractérisé en ce que** les canaux (3, 4, 9) se terminent dans l'environnement du dispositif (1) par l'intermédiaire d'une ouverture de sortie commune (10).

5. Dispositif selon l'une quelconque des revendications 1 à 3, **caractérisé en ce que** les canaux (3, 4, 9) se terminent dans l'environnement du dispositif (1) respectivement par l'intermédiaire d'une ouverture de sortie (10a, 10b, 10c).

6. Dispositif selon la revendication 5, **caractérisé en ce que** chacun des canaux (3, 4, 9) présente respectivement un axe longitudinal, les axes longitudinaux des canaux (3, 4, 9), en particulier du côté des ouvertures de sortie (10a, 10b, 10c), ne sont parallèles les uns aux autres.

7. Dispositif selon l'une quelconque des revendications précédentes, **caractérisé en ce qu'**au moins l'un des canaux (3, 4, 9) du côté de l'environnement du dispositif (1) est recouvert au moyen d'une couche de protection flexible.

8. Dispositif selon l'une quelconque des revendications précédentes, **caractérisé en ce qu'**au moins deux des canaux (3, 4, 9) présentent une longueur différente, leur longueur étant différente en particulier d'une demi-longueur d'onde du signal acoustique.

9. Dispositif selon l'une quelconque des revendications précédentes, **caractérisé en ce qu'**au moins l'un des canaux (3, 4, 9) présente entre le volume intérieur du dispositif (1) et l'environnement du dispositif (1) une ouverture supplémentaire (11) par laquelle des impuretés peuvent sortir et dont le diamètre est inférieur à un diamètre du canal respectif (3, 4, 9).
